# EUROPÄISCHE PATENTSCHRIFT

(11) **EP 3 225 373 B1**
(45) Veröffentlichungstag und Bekanntmachung des Hinweises auf die Patenterteilung: **30.01.2019**
(21) Anmeldenummer: 17164337.2
(22) Anmeldetag: 31.03.2017
(51) Int. Cl.: B29C 41/08, B29C 41/22, B29C 41/32, B29C 41/36, F16L 11/04, F16L 11/08

(54) **VERFAHREN ZUR HERSTELLUNG EINES SCHLAUCHFÖRMIGEN KÖRPERS**
METHOD FOR PRODUCING A HOSE-SHAPED BODY
PROCÉDÉ DE FABRICATION D'UN CORPS TUBULAIRE

(30) Priorität: 31.03.2016 DE 102016003736
(43) Veröffentlichungstag der Anmeldung: 04.10.2017
(73) Patentinhaber: FKM Walzentechnik Dr. Freudenberg GmbH, 47167 Duisburg (DE)
(72) Erfinder: POPP, Eckhard Günter, 21244 Buchholz I.D. Nordheide (DE); MALLUCHE, Jan, 45479 Mülheim a.d. Ruhr (DE); FREUDENBERG, Ulrich, 45478 Mülheim a.d. Ruhr (DE)
(74) Vertreter: Demski, Siegfried

(56) Entgegenhaltungen:
- EP-A2- 0 184 759
- WO-A1-2012/006998
- GB-A- 1 165 042
- GB-A- 1 523 443
- JP-B2- 5 744 701
- US-A- 4 689 003
- US-A1- 2004 154 676

## Beschreibung

Die Erfindung betrifft ein Verfahren zur Herstellung eines schlauchförmigen Körpers, insbesondere einen Schlauch zum Transport von abrasiven Materialien.

Schlauchförmige Körper werden im Wesentlichen zum Transport von teilweise festen und flüssigen Stoffen benötigt, wobei die schlauchförmigen Körper als rotationssymmetrische Schläuche ausgebildet sind und durch die zu transportierenden Materialien erhöhten Beanspruchungen ausgesetzt werden. Häufig werden abrasive Materialien befördert, beispielsweise Wasser mit festen Bestandteilen, wobei diese in Einzelfällen scharfkantig sein können. Üblicherweise werden für den Transport Gummischläuche eingesetzt, die gegebenenfalls mit einem Gewebe verstärkt sind, damit entsprechende Druckkräfte von mehr als 120 BAR aufgenommen werden können. Die Standzeiten derartiger Schläuche aus Gummi sind sehr begrenzt, sodass der Wunsch besteht, andere Materialien einzusetzen.

Die Offenlegungsschrift DE 34 21 364 A1 offenbart ein Verfahren zum Herstellen von länglichen Hohlkörpern, insbesondere Schläuchen unter Verwendung eines rotierenden Kernes. Dem Kern sind vier Rollenböcke zugeordnet von denen von Vorratsrollen einander überlappende Bahnen einer Trennfolie abgewickelt werden und mittels mehrerer Gießköpfe ein flüssiges Material, ein Reaktionsgemisch oder eine Schmelze auf die Trennfolie aufgebracht wird. Das Aufbringen des flüssigen Materials erfolgt hierbei unter gleichzeitiger Einarbeitung einer Gewebebahn, die als Festigkeitsträger dient.

Aus der EP 0 036 184 A1 und EP 0 184 759 A1 sind weitere Verfahren zur Herstellung schlauchförmiger Körper bekannt, wobei mittels eines Gießkopfes mindestens zwei flüssige oder pastöse Komponenten zur Reaktion gebracht werden und das gleichzeitige Einbringen eines Fadens als Festigkeitsträger vorgesehen ist.

Aus der US 4,689,003 A ist ein Verfahren und eine Vorrichtung zur kontinuierlichen Herstellung von länglichen Hohlkörpern bekannt. Der Hohlkörper wird hierbei auf einen Dorn aufgewickelt und während des Produktionsprozesses kontinuierlich abgezogen, wobei der Wickelkern einseitig drehbar gelagert ist. Die erforderlichen Polyurethanmaterialien einschließlich einer Gewebebahn werden von vorhandenen Vorratsrollen abgewickelt und dem Kern zugeführt. Aufgrund der Arbeitsweise ist es beispielsweise nicht möglich die Lagen über Kreuz aufzuwickeln.

Aus der EP 0 184 759 A1 ist die Herstellung eines dreiteiligen Kerns sowie die Herstellung eines Hohlkörpers bekannt. Auch in diesem Fall wird der Wickelkern einseitig drehbar gelagert und die Materialien auf den Wickelkörper aufgewickelt. Aus der GB 1 165 042 A und der JP 57 44 701 ist ein Verbundschlauch bekannt, welcher eine Verstärkungslage aufweist. Aus der WO 2012/006 998 A1 ist die Verwendung einer Verstärkungslage bekannt, die über Kreuz aufgewickelt wird.

Die aus dem Stand der Technik bekannten Verfahren weisen hierbei den Nachteil auf, dass die elastomeren Werkstoffe unmittelbar mit einer Verstärkungslage in Form eines Fadens oder eines Gewebes umwickelt werden und dieser Faden die pastösen elastomeren Werkstoffe durchdringt und bis in die unterste Schichten in der Nähe des Kerns eindringt. Somit befindet sich der Festigkeitsträger nicht im mittleren Bereich der herzustellenden schlauchförmigen Körper, sondern konzentriert sich in unmittelbarer näher des inneren Durchmessers. Bei entsprechender Wandstärke der Außenschichten des rotationssymmetrischen Körpers ist damit keine über den gesamten Querschnitt gewünschte Festigkeit gewährleistet.

Der vorliegenden Erfindung liegt daher die Aufgabe zugrunde, ein verbessertes Verfahren zur Herstellung eines rotationssymmetrischen Körpers aufzuzeigen und die Möglichkeit einer Positionsbestimmung der Festigkeitsträger innerhalb der Wandstärke vorzunehmen.

Erfindungsgemäß wird die Aufgabe durch zumindest folgende Verfahrensschritte gelöst:
- Druckloses Auftragen zumindest einer ersten aushärtbaren Kunststoffschicht aus reaktiven Polyurethan-Materialien auf einen Kern durch ein Rotationsgussverfahren,
- Aushärten der wenigstens einen Kunststoffschicht zumindest zu 90%, bevor die Verstärkungslage aufgewickelt wird,
- Druckloses Auftragen zumindest einer zweiten aushärtbaren Kunststoffschicht, wobei die Verstärkungslage lunkerfrei zwischen beiden Kunststoffschichten eingebettet wird, und
- Entnehmen des Kerns nach Fertigstellung des Körpers,
- wobei der schlauchförmige Körper zumindest einenends mit einem Fitting versehen ist und die Fittinge unmittelbar mit der Verstärkungsfaserlage verbunden sind, wobei die Fittinge aus einer Flanschscheibe mit Befestigungsbohrungen und einem Flanschhals oder aus einer Flanschscheibe mit Befestigungsbohrungen und einem Klemmring bestehen, wobei für die Fittinge aus Stahl oder ein Kunststoff, vorzugsweise Polyurethan-Material verwendet wird.

Weitere vorteilhafte Ausgestaltungen des Verfahrens sind den Unteransprüchen zu entnehmen.

Der besondere Vorteil der vorliegenden Erfindung besteht darin, dass eine erste aushärtbare Kunststoffschicht auf einen Kern aufgetragen werden kann, die hinsichtlich der Schichtdicke an die gestellten Anforderungen angepasst werden kann und zunächst das Aushärten der Kunststoffschicht abgewartet wird, bis eine Verstärkungslage, vorzugsweise über Kreuz aufgewickelt wird. Auf die erste aushärtbare Kunststoffschicht mit Verstärkungslage wird in einem dritten Arbeitsgang zumindest eine zweite aushärtbare Kunststoffschicht aufgetragen, deren Schichtdicke sich ebenfalls nach den Anforderungen richtet. Nach Aushärten des schlauchförmigen Körpers wird der Kern entfernt und kann wieder verwendet werden. Sowohl die erste als auch zweite Kunststoffschicht kann hierbei in einem Arbeitsgang gegebenenfalls auch in zwei Arbeitsgängen entsprechend der gewünschten Schichtdicke aufgetragen werden und es besteht des Weiteren die Möglichkeit, dass auf eine erste Kunststoffschicht zunächst eine Verstärkungslage aufgewickelt wird, danach eine zweite aushärtbare Kunststoffschicht aufgetragen wird und gegebenenfalls zumindest eine weitere Verstärkungslage aufgewickelt wird, die anschließend nochmals mit einer Kunststoffschicht überdeckt wird. Durch die Einbettung einer oder zweier radial beabstandeter Verstärkungslagen kann hierbei individuell auf die gestellten Forderungen seitens der gewünschten Elastizität und aufzunehmenden Zugkräfte eingegangen werden, wobei die Verstärkungslagen jeweils über Kreuz aufgewickelt werden können. Vorzugsweise werden Kunststoffschichten und Verstärkungslagen auf einen rotierenden Kern aufgetragen beziehungsweise aufgewickelt. Soweit nur eine innere und äußere Kunststoffschicht aufgetragen wird, dient die äußere Kunststoffschicht gleichzeitig als Schutzschicht. Unabhängig davon könnte aber auch eine zusätzliche Schutzschicht aufgetragen werden.

Die schlauchförmigen Körper, insbesondere Schläuche werden auf einem entfernbaren Kern hergestellt und können in vielfältiger Form weiter verwendet werden. Je nach Kundenwunsch besteht beispielsweise die Möglichkeit, die Schläuche ohne Flanschkonstruktion auszuliefern oder eine Flanschkonstruktion bereits vorzusehen, um eine feste Verbindung mit dem Schlauch herzustellen.

Eine erste Variante sieht vor, dass die Fittinge aus einer Flanschscheibe mit Befestigungsbohrungen und einem Flanschhals bestehen. In diesem Fall wird der schlauchförmige Körper auf den Flanschhals aufgeschoben und mit diesem verbunden, beispielsweise durch eine Kaltverklebung. Die Fittinge selbst können aus Stahl oder einem Kunststoff, vorzugsweise Polyurethan-Material hergestellt werden.

Alternativ wird gemäß der ersten Ausführungsvariante ein Fitting verwendet, welcher aus einer Flanschscheibe mit Befestigungsbohrungen und einem Klemmring beziehungsweise einer Lamelle besteht. Weitere Varianten von Flanschkonstruktionen können ebenfalls zur Anwendung kommen.

Die Kunststoffschicht besteht aus einem reaktiven Polyurethan-Material besteht, welches auf den Kern beziehungsweise den darunter liegenden Schichten aus Verstärkungslagen oder Kunststoffschichten zum Aushärten aufgetragen wird. In der Regel besteht das Polyurethan-Material aus zumindest zwei Komponenten, die über eine entsprechende Vorrichtung mit Austrittsöffnungen vermischt und mithilfe einer Austrittsdüse und einem Gießkopf auf den Kern beziehungsweise die bereits fertig gestellten Schichten aufgetragen wird. Das Ausreagieren des Reaktionsgemisches zu einer festen chemischen Verbindung erfolgt sehr schnell und kann durch Zugabe von Reaktionsstoffen beeinflusst werden, sodass die Reaktionszeit in einem breiten Bereich eingestellt werden kann.

Das Polyurethan-Material wird aus einem Reaktionsprodukt einer Isocyanatkomponente und einer Harzmischungskomponente gebildet. Die Isocyanatkomponente kann aromatisch oder aliphatisch sein, wobei es sich bei der Isocyanatkomponente um ein Monomer, ein Polymer oder eine Variantenreaktion von Isocyanaten, eines Quasiprepolymers oder eines Prepolymers handeln kann. Die Harzmischung kann aus Polymerharzen, die von Aminogruppen oder Hydroxyl-Gruppen abgeschlossen werden und/oder Kettenverlängerern, die von Aminogruppen oder Hydroxyl-Gruppen abgeschlossen werden, bestehen. Die von Aminogruppen abgeschlossenen Bestandteile der Polymerharze weisen keine Hydroxyl-Anteile auf.

Für die unterschiedlichen Komponenten des Polyurethan-Materials stehen somit eine Vielzahl von Substanzen zur Verfügung. Wichtig ist, dass das Reaktionsprodukt elastische wie auch abriebfeste Eigenschaften aufweist. Aus diesem Grunde wird zweckmäßiger Weise die Kunststoffschicht aus einem Polyurethan hergestellt. Besonders bevorzugt besteht die Kunststoffschicht hierbei aus einem 2k- oder Mehrkomponenten- Polyurethansystem. Durch die Verwendung von Polyurethan-Materialien können hierbei wesentlich höhere Standzeit der Schläuche erzielt werden, als gegenüber herkömmlichen vulkanisierten Gummischläuchen.

Die beiden Komponenten, aus denen die Kunststoffschichten gebildet werden, werden kurz vor dem Aushärten auf die vorgesehene Oberfläche im Rotationsgussverfahren aufgetragen, sodass sich auf dem Kern eine feste teilausgehärtete Kunststoffschicht ausbildet, wobei das Gießen drucklos erfolgt und eine Topfzeit von ca. 45 Sekunden, bevorzugt 5-15, besonders bevorzugt von 7-8 Sekunden vorgesehen ist.

Hierbei ist vorgesehen, dass die Verstärkungslage lunkerfrei zwischen den ersten und zweiten Kunststoffschichten eingebettet wird, um eine feste und dauerhafte Verbindung zwischen der Verstärkungslage und den Kunststoffschichten herzustellen.

In Ausgestaltung der Erfindung ist vorgesehen, dass die wenigstens eine erste Kunststoffschicht vor dem Aufwickeln der Verstärkungslage zumindest zu 90%, vorzugsweise zu 95%, besonders bevorzugt zu 98% ausgehärtet ist. Nur durch die Aushärtung der ersten Kunststoffschicht wird erreicht, dass die Verstärkungslage nicht bis zum Kern in die erste Kunststoffschicht eindringen kann. Die Aushärtezeit der verwendeten Materialien wird hierbei durch die Zugabe von Reaktionsstoffen beeinflusst und ermöglicht auf diese Weise eine Zeiteinsparung bei der Produktion der schlauchförmigen Körper. Je nach Wandstärke und Härtegrad können hierbei mehrere erste und zweite Schichten aufgetragen werden, um die dynamischen Anforderungen des schlauchförmigen Körpers zu gewährleisten. Die Dicke der ersten Kunststoffschicht bestimmt hierbei die Position der Verstärkungslage innerhalb der Wandstärke und kann durch das spätere Aufwickeln auf die ausgehärtete Kunststoffschicht somit individuell beeinflusst werden. Es besteht beispielsweise die Möglichkeit zuerst eine erste Kunststoffschicht und nach dem Aushärten eine erste Verstärkungslage, vorzugsweise über Kreuz aufzuwickeln, um sodann nochmals zumindest eine weitere aushärtbare Kunststoffschicht aufzutragen, die im Anschluss nochmals mit einer Verstärkungslage, vorzugsweise über Kreuz umwickelt werden kann. Zum Abschluss wird dann eine zweite aushärtbare Kunststoffschicht aufgetragen, um den schlauchförmigen Körper fertig zu stellen. Bevorzugt kann die Verstärkungslage zwischen der ersten und zweiten Kunststoffschicht eingebettet werden, wobei zusätzlich die Möglichkeit besteht die Verstärkungslage nicht genau in der Mitte zu platzieren, sondern innerhalb der Wandstärke in einem bestimmten Abstand zum Außendurchmesser anzuordnen, wobei ebenfalls mehrere Verstärkungslagen über die Dicke verteilt angeordnet werden können, um beispielsweise die Druckfestigkeit, die Zugfestigkeit oder Verschleißfestigkeit des schlauchförmigen Körpers, insbesondere eines Schlauches nachhaltig zu verbessern. Es ist im Weiteren denkbar, dass auch mehr als zwei Verstärkungslagen in der beschriebenen Weise eingebettet werden.

In besonderen Fällen kann der fertiggestellte schlauchförmige Körper zusätzlich nach dem Auftragen der letzten Kunststoffschicht mit einer Schutzschicht überzogen werden.

Dies kann immer dann erforderlich sein, wenn die hergestellten Schläuche vor äußeren Einflüssen geschützt werden müssen.

In weiterer Ausgestaltung der Erfindung ist vorgesehen, dass die Verstärkungslage aus Einzelfasern, einem Cordgewebe oder Fasergelege besteht, welche(s) mit einem Winkel von 50° bis 60°, vorzugsweise 55° aufgewickelt wird. Sowohl Einzelfasern als auch ein Cordgewebe oder Fasergelege können für die Verstärkungslage eingesetzt werden, wobei sich ein Wickelwinkel von 55° als optimal herausgestellt hat, weil bei einem Wickelwinkel von größer als 55° ein frei beweglicher Schlauch unter Innendruck je nach Genauigkeit der Konstruktion bei gleichbleibenden Innendurchmesser sich nur in Längsrichtung vergrößern kann, während sich bei einem Wickelwinkel kleiner als 55° der Durchmesser des Schlauches unter Druck vergrößert und gleichzeitig die Schlauchlänge reduziert wird.

Sofern keine Einzelfasern infrage kommen, werden bevorzugt hochelastische Kettfäden-Corden aus Nylon, Polyester, ein Hybridgewebe oder dergleichen eingesetzt. Alternativ kommen auch Stahl- und Aramidfäden in Frage, welche dann allerdings die Biegefähigkeit und das Arbeitsaufnahmevermögen reduzieren. Die Elastizität der verwendeten Einzelfasern oder Fasergewebe bewirken hierbei bei gleichen Berstdruck ein völlig unterschiedliches Verhalten bei dynamischer Beanspruchung. Typischer Weise werden hierbei Schlauchdurchmesser von 50 bis 1200 mm mithilfe des aufgezeigten Verfahrens hergestellt.

Um die Druckfestigkeit der nach dem Verfahren hergestellten schlauchförmigen Körper zu erhöhen, ist im Weiteren vorgesehen, dass auf die letzte Kunststoffschicht, insbesondere Verschleißschicht, ein ringförmiges oder spiralförmiges Versteifungselement im Rotationsgussverfahren aufgetragen wird, welches zueinander beabstandet verläuft, oder dass auf die letzte Kunststoffschicht , insbesondere Verschleißschicht, ein ringförmiges oder spiralförmiges Versteifungselement aufgewickelt wird, welches zueinander beabstandet verläuft. Mit Hilfe des Versteifungselementes wird die Druckfestigkeit des schlauchförmigen Körpers erhöht, wobei die Versteifungselemente im Rotationsgussverfahren aufgetragen und insbesondere aufgegossen werden können, oder alternativ können ringförmige oder spiralförmige Versteifungselemente aufgewickelt werden. Sowohl die Ringe als auch die spiralförmige Anordnung werden hierbei in einem gebührenden Abstand hergestellt, da die gesamte Oberfläche des schlauchförmigen Körpers für die Erhöhung der Druckfestigkeit berücksichtigt werden muss. Der Abstand der einzelnen ringförmigen Versteifungselemente bzw. spiralförmigen Versteifungselemente kann hierbei den erforderlichen Druckverhältnissen angepasst werden.

Durch die Versteifungselemente wird die Festigkeit gegenüber dem Innendruck wesentlich erhöht, wobei zusätzlich die Möglichkeit besteht, dass eine Verschleißschicht und die Versteifungselemente wiederum mit einem Festigkeitsträger umwickelt werden. Zu diesem Zweck werden vorzugsweise Kunststofffasern mit PU als Matrix verwendet. Als Schutzschicht kann Außen eine Deckschicht aus PU aufgetragen werden.

In weiterer Ausgestaltung des Verfahrens ist hierbei vorgesehen, dass vorgefertigte Ringe oder Spiralen eingesetzt werden, die als Versteifungselemente im Zuge der Schlauchherstellung aufgelegt werden. Im einfachsten Fall werden ringförmige oder spiralförmige Strukturen aus schlagzähen Hart-PU auf die Verschleißschicht aufgegossen, die sich mit der Verschleißschicht unmittelbar fest verbindet. Für diese Vorgehensweise eignet sich das Rotationsgussverfahren. Bei der geometrischen Gestaltung ist hierbei darauf zu achten, dass die Biegsamkeit des Schlauchelementes nicht zu sehr behindert wird, dass aber auch eine ausreichende Versteifung des Querschnittes erreicht wird.

Bei größeren Durchmessern von mehr als 300 mm werden vorzugsweise steifere Verstärkungselemente eingesetzt. Diese lassen sich als Faserverbundmaterial auf die Verschleißschicht aufwickeln, wobei als Karbonfasern, Glasfasern aber auch Metalldraht in Frage kommt. Die Fasern können aus Faserbündeln aus Endlosfasern bestehen. Es können aber auch Bänder in der Form eines Geleges verwendet werden. Zur Verbindung der Versteifungselemente mit der letzten Kunststoffschicht ist eine Matrix vorgesehen, die aus einer aushärtbaren Kunststoffmischung besteht, wie zum Beispiel PU oder Epoxidharz. Ein bevorzugtes Verfahren der Verarbeitung sieht vor, dass die Fasern oder Drähte zunächst mit der Matrix benetzt werden, dann elektronisch gesteuert auf die Verschleißschicht aufgewickelt werden, um anschließend die Matrix aushärten zu lassen. In sämtlichen beschriebenen Fällen kann eine Verstärkungsschicht für Druckfestigkeit und eine Schutzschicht aufgetragen werden.

Ferner besteht die Möglichkeit, dass der Flanschhals mit zumindest einer Rippe oder einem Rundring versehen ist, welche entweder einstückig ausgebildet oder nachträglich aufgeschweißt werden. Um die Verstärkungslage mit der Flanschkonstruktion fest zu verbinden ist vorgesehen, dass die Verstärkungslage über die Rippen oder einem ersten festliegenden Rundring geführt wird und um einen zweiten verschieblich gelagerten Rundring auf dem Flanschhals gelegt wird, wobei die beiden Rundringe durch die entstehende Zugkraft beim Wickeln nebeneinander zu liegen kommen. Bei der Herstellung des schlauchförmigen Körpers mit Flanschkonstruktion wird auf diese Weise eine abreißfeste Verbindung nur über die Verstärkungslage geschaffen, die zusätzlich durch die äußere Kunststoffschicht ummantelt ist. Die Ummantelung wird in diesem Fall über die Rundringe hinweg geführt und endet vor der Flanschscheibe auf dem Flanschhals oder kann gegebenenfalls bis zur Flanschscheibe je nach Befestigungsart durchgezogen werden. Bevor die Verstärkungslage auf die beschriebene Art und Weise festgelegt wird erfolgt ein Aufschieben des Fittings oder der Flanschkonstruktion auf die erste Kunststoffschicht, wobei auch in diesem Fall der Flanschhals mit der Kunststoffschicht durch eine Kaltverklebung miteinander verbunden werden kann.

Als weitere Alternative besteht die Möglichkeit, anstelle von zwei Rundringen insgesamt drei Rundringe zu verwenden. In diesem Fall wird die Verstärkungslage über die Rippen oder ein ersten festliegenden Rundring und unterhalb eines zweiten verschieblich gelagerten Rundringes geführt, der beispielsweise auch nachträglich aufgebracht werden kann. Die Verstärkungslage wird im Anschluss um einen dritten verschieblich gelagerten Rundring herum geführt, im Anschluss nochmals unterhalb des zweiten verschieblichen Rundringes und über den festliegenden ersten Rundring beziehungsweise die ausgebildete Rippe geführt, sodass auch in diesem Fall beim Wickeln sämtliche Rundringe nebeneinander zu liegen kommen. Hierdurch wird bei der Herstellung des schlauchförmigen Körpers mit Flanschkonstruktion eine abreißfeste Verbindung nur über die Verstärkungslage geschaffen, die zusätzlich durch eine äußere Kunststoffschicht ummantelt werden kann.

In besonderer Ausgestaltung der Erfindung ist vorgesehen, dass die Rundringe entweder als Vollring oder Halbring ausgebildet sind und durch eine oder zwei Spannhülsen miteinander verbunden werden. Somit können die zweiten und dritten Rundringe, insbesondere der mittlere zweite Rundring nachträglich über die Verstärkungslage gelegt werden, bevor der Wickelvorgang fortgesetzt wird. Die Rundringe werden hierbei mit Spannhülsen gespannt, welche endseitig jeweils ein Links-/Rechtsgewinde aufweisen, sodass mit Verdrehen der Spannhülsen die Rundringe zusammengezogen werden.

Als weitere besondere Alternative besteht die Möglichkeit, dass die Verstärkungslage über die Rippen oder einen ersten festliegenden Rundring geführt hergestellt ist, wobei die Verstärkungslage aus Einzelfasern, einem Cordgewebe oder einem Fasergelege besteht, welches unter einem Winkel von 50° bis 60° über Kreuz aufgewickelt ist.

In weiterer Ausgestaltung der Erfindung ist vorgesehen, dass bei mehreren Verstärkungslagen jede einzelne Verstärkungslage über jeweils eine Rippe oder einen Rundring geführt und befestigt wird, oder dass die ersten und zweiten Kunststoffschichten und die Verstärwird und im Anschluss über einen Profilring geführt und mithilfe eines Stahlbandes verspannt wird, wobei durch das Stahlband eine Verpressung von Verstärkungslage und Profilring auf dem Flanschhals erfolgt. Auch in diesem Fall kommt der Profilring neben dem ersten Rundring zu liegen. Anstelle eines axial beweglichen Rundringes wird diesem Fall ein Stahlband mit einem Profilring verwendet, wobei der Profilring von der Verstärkungslage eingeschlagen wird und mithilfe des Stahlbandes eine Verpressung auf dem Flanschhals erfolgen kann. Wie in den vorherigen Beispielen wird die äußere Kunststoffschicht in diesem Fall über den Rundring, dem Profilring und das Stahlband geführt, sodass die Verstärkungslage letztendlich vollständig in den Kunststoffmaterialien eingebettet ist. Der Flanschhals wird mit der unteren Kunststoffschicht wiederum durch eine Kaltverklebung verbunden. Als Befestigungsring kann ein einteiliger oder zweiteiliger Befestigungsring eingesetzt werden, welcher mit zumindest einer Spannhülse verspannt wird.

Soweit mehrere Verstärkungslagen vorgesehen werden sollen, kann jede einzelne auf die vorgenannte Weise mit dem Fitting beziehungsweise der Flanschkonstruktion verbunden werden.

Durch das aufgezeigte Verfahren wird hierbei ein schlauchförmiger Körper hergestellt, insbesondere ein Schlauch zum Transport von abrasiven Materialien, bestehend aus zumindest einer Körperwandung, welcher sich dadurch auszeichnet, dass eine Verstärkungslage zwischen einer ersten und einer zweiten zumindest zu 90% ausgehärteten Kunststoffschicht aus Polyurethan-Materialien eingebettet ist, welche mit Hilfe eines Gießkopfes druckloshergestellt ist, wobei die Verstärkungslage aus Einzelfasern, einem Cordgewebe oder einem Fasergelege besteht, welches unter einem Winkel von 50° bis 60° über Kreuz aufgewickelt ist, wobei zumindest einenends ein Fitting mit dem Körper verbunden ist, wobei die Fittinge aus einer Flanschscheibe mit Befestigungsbohrungen und einem Flanschhals oder aus einer Flanschscheibe mit Befestigungsbohrungen und einem Klemmring bestehen, wobei die Fittinge aus Stahl oder einem Kunststoff, vorzugsweise Polyurethan-Material bestehen.

Ein auf diese Weise hergestellter schlauchförmiger Körper zeichnet sich dadurch aus, dass die Kunststoffschicht aus Polyurethan-Material besteht, welche zur Stabilisierung auf einem Kern beziehungsweise den darunter liegenden Schichten aus Verstärkungslagen oder Kunststoffschichten zum Aushärten aufgetragen ist. Durch die Auswahl einer bestimmten Dicke der ersten Kunststoffschicht und weiterer Kunststoffschichten kann hierbei individuell festgelegt werden, in welcher Position der Wandstärke die Verstärkungslage oder gegebenenfalls mehrere Verstärkungslagen angeordnet werden, um die notwendige Flexibilität und Stabilität der schlauchförmigen Körper sicher zu stellen.

Hierbei ist vorgesehen, dass bei mehreren Verstärkungslagen jede einzelne Verstärkungslage über jeweils eine Rippe oder einen Rundring geführt und befestigt wird, oder dass die ersten und zweiten Kunststoffschichten und die Verstärkungslage zwischen Flanschscheibe und Klemmring verspannt werden, oder dass die Fittinge mit Ihrem Flanschhals auf die erste Kunststoffschicht aufgeschoben und mit einer Kaltverklebung verbunden sind.

Ferner ist für den schlauchförmigen Körper vorgesehen, dass die Einzelfasern, ein Cordgewebe oder ein Fasergelege zumindest einmal über Kreuz aufgewickelt sind, um eine besonders hohe Zugfestigkeit und Druckfestigkeit zu erreichen.

Die Fittinge bestehen aus einer Flanschscheibe mit Befestigungsbohrungen und einem Flanschhals oder aus einer Flanschscheibe mit Befestigungsbohrungen und einem Klemmring, wobei die Fittinge aus Stahl oder einem Kunststoff, vorzugsweise Polyurethan-Material bestehen können. Die schlauchförmigen Körper können mit den beschriebenen Fittingen wahlweise an beiden Enden oder gegebenenfalls mit unterschiedlichen Fittingen an jedem Ende ausgestattet werden, damit mehrere schlauchförmige Körper miteinander zu einem längeren Schlauch verbunden werden können, wobei auch unterschiedliche Schlauchausführungen zum Einsatz kommen können.

In weiterer Ausgestaltung ist vorgesehen, dass auf die erste und/oder die zweite Kunststoffschicht zumindest eine weitere Kunststoffschicht aufgetragen ist, um eine besonders große Wandstärke zu erzielen oder gegebenenfalls mehrere Verstärkungslagen einzubetten.

In besonderer Ausgestaltung ist vorgesehen, dass die Fittinge mit ihrem Flanschhals auf die äußerste Kunststoffschicht aufgeschoben und kalt verklebt sind, oder dass die ersten und zweiten Kunststoffschichten und die Verstärkungslagen zwischen einer Stahlscheibe und einem Klemmring eingespannt sind.

Alternativ besteht die Möglichkeit, dass die Fittinge beziehungsweise die Flanschkonstruktion mit zumindest einer festliegenden Rippe beziehungsweise einem Rundring versehen und die Verstärkungslage über die Rippe oder den Rundring geführt sind und um einen zweiten axial verschieblich gelagerten Rundring gewickelt werden, der aufgrund des Wickelprozesses in unmittelbarer Anlage an den festliegenden Rundring gelangt, um auf diese Weise eine feste Verbindung zwischen dem schlauchförmigen Körper und der Flanschkonstruktion herzustellen.

Alternativ besteht die Möglichkeit, dass insgesamt drei Rundringe verwendet werden, wovon ein erster Rundring mit der Flanschkonstruktion fest verbunden ist und zwei weitere Rundringe verschieblich auf dem Flanschhals geführt sind. Die Verstärkungslage wird hierbei über den ersten feststehenden Rundring geführt, unter dem zweiten Rundring hindurch um den dritten Rundring gewickelt und im Anschluss zurückgeführt wieder unter dem zweiten Rundring. hindurch geführt, sodass beim Wickeln der Verstärkungslage die Rundringe durch die auftretenden Zugkräfte gegen den ersten Rundring gezogen werden Bei den Rundringen kann es sich um offene Ringe oder gegebenenfalls zwei Ringhälften handeln, die mithilfe einer Spannhülse verspannt werden. Der zweite Rundring kann hierbei nachträglich aufgelegt und verspannt werden.

Als weitere Alternative besteht die Möglichkeit, dass an Stelle eines zweiten beweglichen Rundringes ein Profilring mit Stahlband verwendet wird, wobei die Verstärkungslage um den Profilring geschlungen wird und mithilfe des Stahlbandes eine Verpressung von Verstärkungslage und Profilring auf dem Flanschhals erfolgt. In diesem Fall kann das Stahlband ein-oder zweiteilig ausgebildet sein und mit zumindest einer Spannhülse verspannt werden. Anstelle einer Spannhülse können auch andere Spannmittel, beispielsweise ein Spannschloß verwendet werden.

Die auf diese Weise hergestellten schlauchförmigen Körper können einen Durchmesser von 50 - ≥ 1200 mm aufweisen.

Die vorliegende Erfindung zeichnet sich dadurch aus, dass ein schnelles Herstellungsverfahren angewendet werden kann, welches sicherstellt, dass die notwendigen Verstärkungsfaserlagen in einer Position angeordnet werden können, die den Anforderungen hinsichtlich der Druckfestigkeit und Zugfestigkeit entspricht. Hierbei ist vorgesehen, dass erst nach dem Aushärten einer zumindest ersten Kunststoffschicht die Verstärkungslage aufgewickelt wird, wobei diese vorzugsweise über Kreuz aufgewickelt wird, um im Anschluss zumindest eine zweite Kunststoffschicht aufzutragen. Ebenso besteht die Möglichkeit durch mehrfaches Auftragen von Kunststoffschichten mehrere Verstärkungslagen vorzusehen und diese innerhalb der Kunststoffschichten einzubetten. Durch die Verwendung von Polyurethan-Materialien können hierbei wesentlich höhere Standzeit der Schläuche erzielt werden, als gegenüber herkömmlichen vulkanisierten Gummischläuchen. Die Ausgestaltung mit endseitigen Fittingen lässt sich darüber hinaus relativ einfach gestalten, weil die Fittinge unmittelbar mit der Verstärkungsfaserlage verbunden sind, beispielsweise durch einen zweiten beweglichen Rundring gesichert werden, wobei zusätzlich eine Kaltverklebung zwischen den Fasern, Fittingen und Kunststoffschichten erfolgt, sodass die Befestigung der Fittinge ebenfalls eine höhere Standzeit des schlauchförmigen Körpers gewährleistet. Die übliche Schnittfestigkeit und Abrasionsfestigkeit von Gummischläuchen kann hierbei um das Zwei- bis Dreifache erhöht werden. Hierbei kommt es nicht so sehr auf die Abrasionsfestigkeit, sondern auf die Erosionsfestigkeit der Innenseiten des Schlauches aufgrund der zu fördernden abrasiven Materialien an. Entscheidend ist die Rückprallelastizität des Innenmaterials, welche aufgrund der verwendeten Polyurethan-Materialien sehr hoch ist und individuell eingestellt werden kann. Durch die Verwendung der Kunststoffbeschichtungen und das Aufwickeln der Fasern oder eines Gewebes nach dem Aushärten der ersten Kunststoffschicht ist hierbei sichergestellt, dass die Verstärkungslage nicht in die erste Kunststoffschicht eindringen und somit in einer ausgewählten Position innerhalb der Wandstärke eingebettet werden kann.

Die Erfindung wird im Weiteren anhand der Figuren nochmals erläutert.

Es zeigt
- Fig. 1: in einer teilweise geschnittenen Seitenansicht einen nach dem erfindungsgemäßen Verfahren hergestellten Druckschlauch,
- Fig. 2: in einer teilweise geschnittenen Seitenansicht einen nach dem erfindungsgemäßen Verfahren hergestellten Saugschlauch,
- Fig. 3: in einer Draufsicht den Druckschlauch gemäß Figur 1,
- Fig. 4: in einer Schnittzeichnung den Druckschlauch gemäß Figur 1,
- Fig. 5: in einer schematischen Ansicht und einer Draufsicht eine Verbindung des schlauchförmigen Körpers mit einem Flansch,
- Fig. 6: in einer schematischen Ansicht eine weitere Möglichkeit zur Verbindung des erfindungsgemäßen Schlauches mit einem Flansch,
- Fig. 7: in einer geschnittenen Seitenansicht, einer Draufsicht und einer geschnittenen Draufsicht eine weitere Ausführungsvariante zur Befestigung mit einem Flansch,
- Fig. 8: in einer Draufsicht die weitere Ausführungsvariante gemäß Figur 7,
- Fig. 9: in einer teilweise geschnittenen Teilansicht einen Druckschlauch mit ringförmigen Versteifungselementen und
- Fig. 10: in einer teilweise geschnittenen Teilansicht einen Druckschlauch mit spiralförmigen Versteifungselementen.

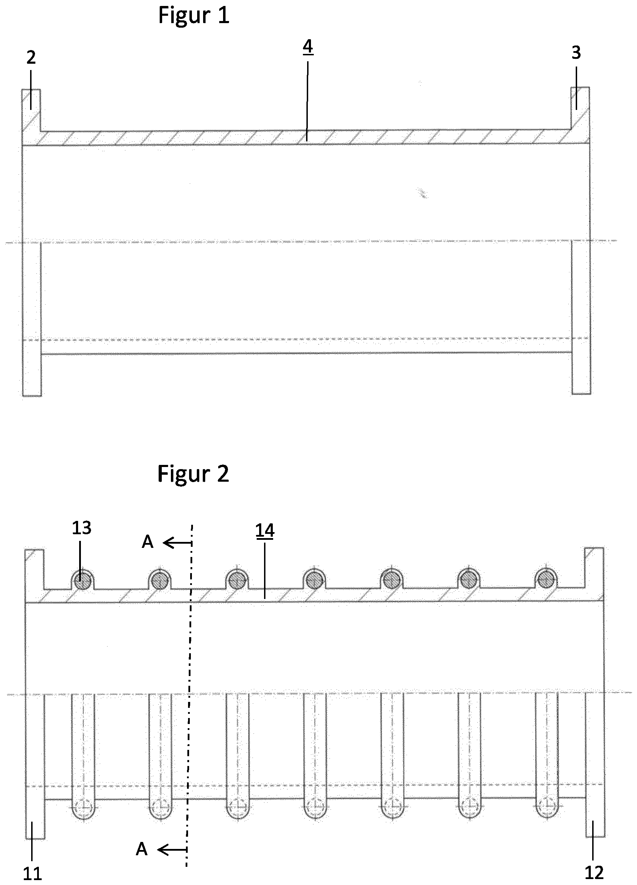

Figur 1 zeigt in einer teilweise geschnittenen Teilansicht einen Schlauchabschnitt 1, bestehend aus einem Körper 4 und endseitigen Fittingen 2, 3. Diese Art von schlauchförmigen Körpern 1 mit einer Außenfläche wird vorzugsweise als Druckschlauch eingesetzt und kann Nennweiten von 50 mm bis zu > 1200 mm besitzen, wobei eine feste Verbindung mit den Fittingen 2, 3 erfolgt, damit mehrere dieser schlauchförmigen Körper 4 miteinander zu einem längeren Schlauch verbunden werden können. Bereits Einzelstücke des schlauchförmigen Körpers 4 können hierbei eine Länge von mehreren Metern aufweisen.

Figur 2 zeigt in einer teilweise geschnittenen Ansicht einen Schlauchabschnitt 9, bestehend aus einem Körper 10, welcher als Saugschlauch eingesetzt wird. Die obere Hälfte des Körpers 10 ist in einer geschnittenen Ansicht dargestellt, wobei auch in diesem Fall der schlauchförmige Körper 10 mit endseitigen Fittingen 11, 12 ausgestattet ist, die fest mit dem Körper 10 verbunden sind. Diese Ausführung ist mit Stahlringen oder auf der Außenseite mit einer rotationsgegossenen Polyurethanspirale mit hoher Härte ummantelt, um eine höhere Festigkeit und Wandungsstabilität zu erzielen.

Beide Ausführungsbeispiele zeigen mögliche schlauchförmige Körper 1, 10, die nach dem erfindungsgemäßen Verfahren hergestellt werden können.

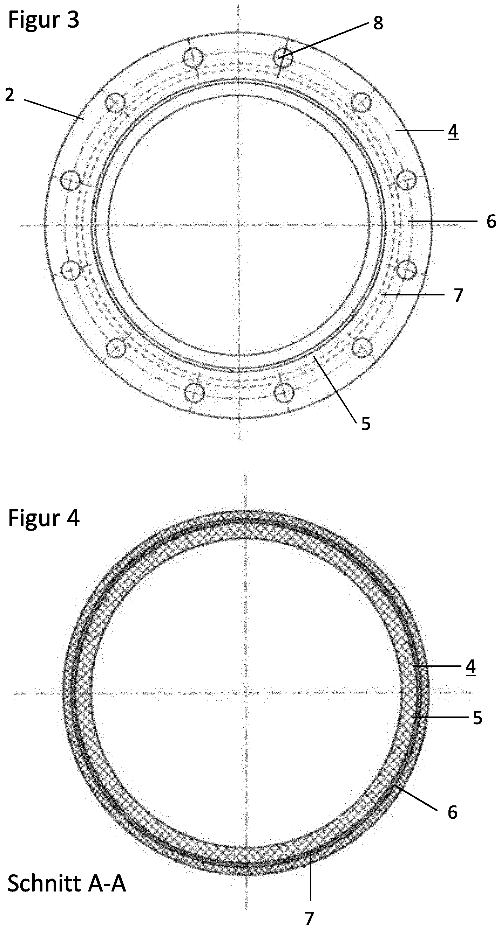

Figur 3 zeigt in einer Draufsicht den aus Figur 1 bekannten schlauchförmigen Körper 4 mit Fitting 2. Aus dieser Ansicht ist der schichtförmige Aufbau des schlauchförmigen Körpers 4 ersichtlich, welcher aus einer inneren Kunststoffschicht 5 und einer äußeren Kunststoffschicht 6 sowie einer Mittellage als Verstärkungslage 7 besteht. Mehrere Befestigungsbohrungen 8 sind zur Verschraubung vorgesehen.

Figur 4 zeigt in einer geschnittenen Ansicht den schlauchförmigen Körper 4 mit der inneren Kunststoffschicht 5, der äußeren Kunststoffschicht 6 und der Verstärkungslage 7. In dem gezeigten Beispiel handelt es sich um eine erste Ausführungsform, die entsprechenden den gestellten Anforderungen abgewandelt werden kann, beispielsweise kann die innere Kunststoffschicht 5 aus mehreren Einzelschichten bestehen und ebenso kann auch die äußere Kunststoffschicht 6 aus mehreren Einzelschichten bestehen. Darüber hinaus kann die Verstärkungslage 7 in mehrfacher Anordnung mit einem radialen Abstand angeordnet sein, vorzugsweise zwischen den einzelnen oder mehreren Kunststoffschichten 5, 6.

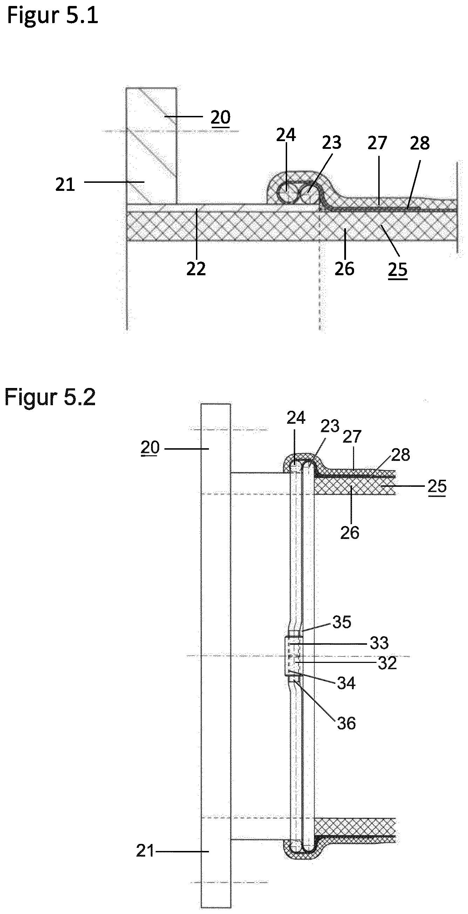

Figur 5.1 zeigt in einer geschnittenen Ansicht die Befestigung eines Saug- oder Druckschlauches mit einem Fitting 20. Der Fitting 20 besteht aus einer Flanschscheibe 21 und einem Flanschhals 22, welche entweder einstückig gefertigt oder fest miteinander verbunden sind. Auf dem Flanschhals ist ein Rundring 23 befestigt, vorzugsweise angeschweißt ist, ein zweiter Rundring 24 ist demgegenüber lose zwischen der Flanschscheibe 21 und dem Rundring 23 beweglich auf dem Flanschhals 22 angeordnet. Ein Schlauchabschnitt 25, bestehend aus einer inneren Kunststoffschicht 26, einer äußeren Kunststoffschicht 27 und einer Verstärkungslage 28, ist über die Verstärkungslage 28 mit dem Fitting 20 verbunden. Die Verbindung erfolgt in der Art, dass die Verstärkungslage 28 über den festen Rundring 23 geführt und um den losen Rundring 24 gewickelt wird. Hierbei kommt der Rundring 24 durch den Wickelvorgang an dem Rundring 23 zu liegen und wird anschließend durch Auftragen der äußeren Kunststoffschicht 27 vollständig eingebettet. Die Einbettung mit der äußeren Kunststoffschicht kann hierbei gegebenenfalls bis zur Flanschscheibe geführt werden. Die innere Kunststoffschicht 26 reicht demgegenüber bis zur Flanschscheibe 21, wobei diese vorzugsweise auf die fertiggestellt erste Kunststoffschicht 26 aufgeschoben und mittels einer Kaltverklebung verbunden ist. Danach erfolgt die Festlegung der Verstärkungslage 28 sowie im Anschluss das Auftragen der zweiten Kunststoffschicht 27.

Wie insbesondere aus der Figur 5.2 ersichtlich ist, handelt es sich bei dem Rundring 24 um einen offenen Ring, welcher mithilfe einer Spannhülse 32 verbunden ist und gespannt werden kann. Zu diesem Zweck weist die Spannhülse 32 in ihren Stirnseiten jeweils eine Gewindebohrung 33, 34 auf, welche als Links-/Rechtsgewinde ausgebildet sind. Somit kann der Spannring 24 mit seinen Gewindeenden 35, 36 in die Hülse eingeschraubt und über eine Drehbewegung verspannt werden. Die Befestigung der Verstärkungslage 28 kann daher wie folgt vorgenommen werden. Die Verstärkungslage 28 wird zunächst über den ersten festliegenden Rundring 23 in Richtung zur Flanschscheibe 21 geführt, danach erfolgt das Auflegen des Spannringes 24 und der Spannvorgang, sodass im Anschluss die Verstärkungslage 28 über den losen Rundring 24 zurückgeschlagen werden kann und auf der bereits gewickelten Verstärkungslage 28 zu liegen kommt. Im Anschluss besteht darüber hinaus die Möglichkeit, eine weitere Kunststoffschicht 27 sowohl über die erste Kunststoffschicht 26 und die Verstärkungslage 28 zu gießen.

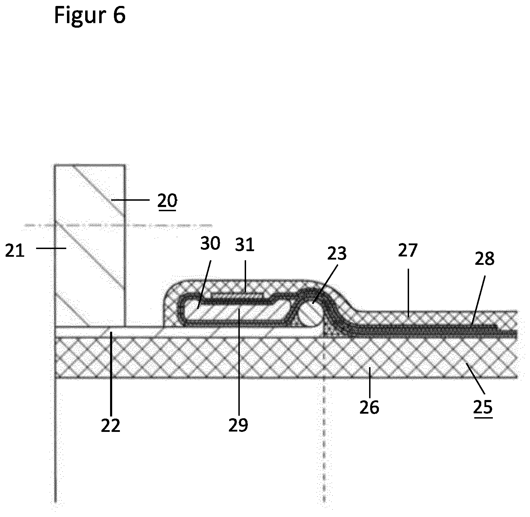

Figur 6 zeigt in einer geschnittenen Ansicht eine andere Verbindung zwischen einem Fitting 20 mit Flanschscheibe 21 und Flanschhals 22 und einem Schlauchabschnitt 25. Wie im vorherigen Beispiel wird der Fitting 20 auf den teilweise vorbereiteten Schlauch, und zwar auf die erste Kunststoffschicht 26 aufgeschoben und die Verstärkungslage 28 wiederum über den Rundring 23 geführt und im Anschluss über einen um den Flanschhals 22 gelegten Profilring 29 gewickelt und bis zum Schlauchabschnitt 25 zurückgeführt. Der Profilring 29 besitzt eine leichte Vertiefung, die trapezförmig, gegebenenfalls U-förmig ausgebildet sein kann. In der Vertiefung 30 kommt zunächst die gewickelte Verstärkungslage 28 zu liegen und wird zusätzlich durch ein Stahlband 31 gehalten. Das Stalband 31 wird hierbei um die gewickelte Verstärkungslage 28 herumgeführt und verspannt, sodass eine Verspannung der Verstärkungslage 28 und dem Profilring 29 auf dem Flanschhals 22 erfolgt. Hierbei wird der Profilring 29 bis an den Rundring 23 herangeführt, sodass sich zwischen dem Rundring 23 und dem Profilring 29 ebenfalls die Verstärkungslage 28 befindet. Mithilfe des Profilrings 29 und dem Stahlband 31 wird hierbei eine sichere Befestigung der Verstärkungslage 28 auf dem Fitting 20 ermöglicht, sodass auch bei axial einwirkenden Kräften auf den Schlauchabschnitt 25 ein sicherer Halt gewährleistet ist. Über die Verstärkungslage 28, dem Stahlband 31 und Profilring 29 wird die zweite äußere Kunststoffschicht 27 aufgetragen. Das Stahlband 31 kann ebenfalls aus zwei Hälften bestehen, sodass mithilfe zumindest einer beziehungsweise zwei Spannhülsen oder ein Spannschloss eine Verspannung erfolgen kann.

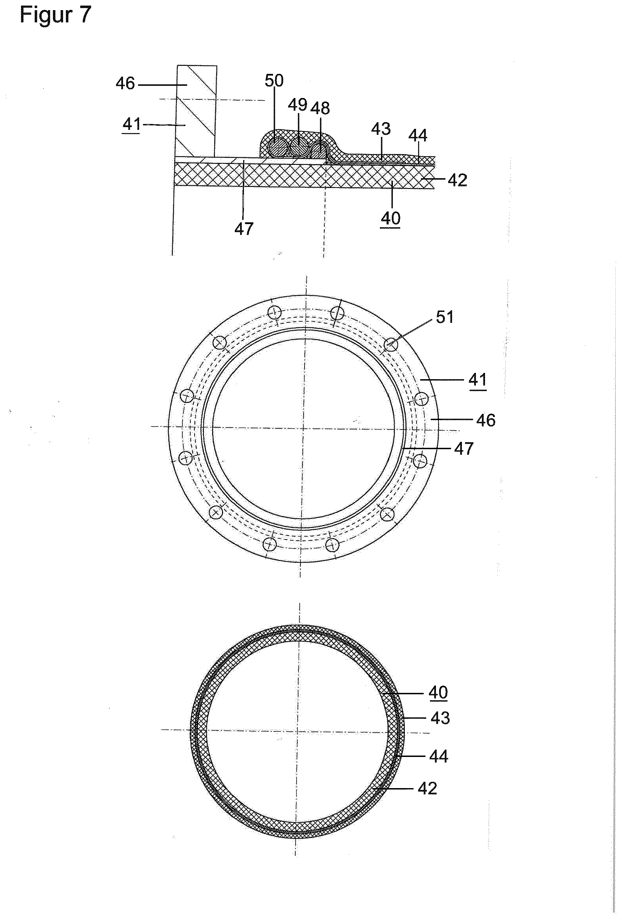

Figur 7 zeigt in drei Ansichten, und zwar einer geschnittenen Seitenansicht, einer Draufsicht und einer geschnittenen Draufsicht, ein weiteres Ausführungsbeispiel für die Verbindung eines Fittings 41 mit einem Schlauchabschnitt 40. Der obere Längsschnitt zeigt den Schlauchabschnitt 40 mit dem Fitting 41. Der Schlauchabschnitt 40 besteht aus einer ersten Kunststoffschicht 42, einer zweiten äußeren Kunststoffschicht 43 und einer Verstärkungslage 44. Der Fitting 41 besteht aus einer Flanschscheibe 46 und einem Flanschhals 47, wobei der Flanschhals 47 auf die bereits fertig gestellte erste Kunststoffschicht aufgeschoben und gegebenenfalls kaltverklebt wird. Auf den Flanschhals 47 ist ein Rundring 48 endseitig befestigt, beispielsweise verschweißt. Zwischen Flanschscheibe 46 und Rundring 48 befindet sich ein zweiter Rundring 49 und ein dritter Rundring 50. Die Rundringe 49, 50 sind axial beweglich angeordnet. Die auf die erste Kunststoffschicht 42 aufgewickelte Verstärkungslage 44 wird über den ersten Rundring geführt, unter dem zweiten Rundring 49 hindurchgeführt, um den dritten Rundring 50 gewickelt und nochmals unter den zweiten Rundring 49 hindurchgeführt über den feststehenden Rundring 48 in die Ebene der Verstärkungslage 44 zurückgeführt. Aufgrund dieser Konstruktion werden bei Zugbelastungen des Schlauchabschnittes 40 die entstehenden Kräfte über die Verstärkungslage 44 in den Fitting 41 direkt eingeleitet.

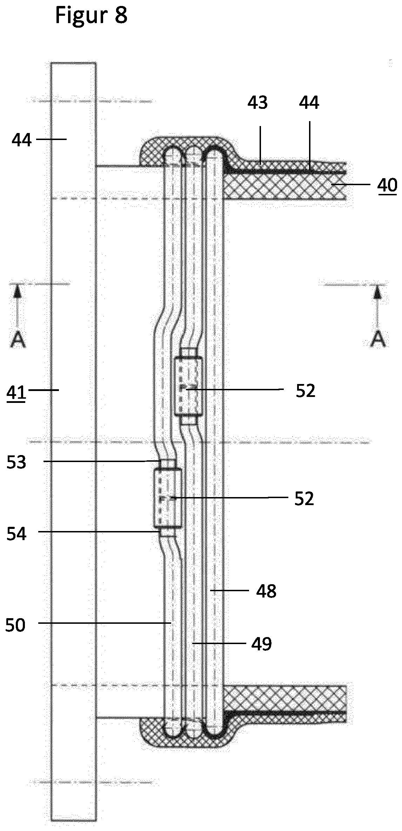

Die beiden losen Rundringe 49, 50 können hierbei aus einem offenen oder zwei geteilten Rundringen bestehen. Die Festlegung und Verspannung auf dem Flanschhals 47 erfolgt mit einer Spannhülse, wie sie aus Figur 8 ersichtlich ist. In der mittleren Ansicht ist eine Draufsicht auf dem Fitting 41 dargestellt, und zwar mit Flanschscheibe 46 sowie Flanschhals 47. Die Flanschscheibe 46 ist mit mehreren umfangsverteilten Bohrungen 51 ausgestattet, sodass eine Verschraubung mit weiteren Fittingen ermöglicht wird. Der Aufbau des Schlauchabschnittes 40 ist in diesem Fall nur durch die gestrichelten Kreisringe angedeutet.

Aus der unteren Teilfigur ist der Schlauchabschnitt 40 ersichtlich, welcher aus einer inneren Kunststoffschicht 42, einer Verstärkungslage 44 und einer äußeren Kunststoffschicht 43 besteht.

Figur 8 zeigt in einer Draufsicht den aus Figur 7 bekannten Schlauchabschnitt 40 mit Fitting 41, wobei aus dieser Ansicht der festliegende Rundring 48 sowie die beiden losen Rundringe 49, 50 ersichtlich sind. Die losen Rundringe 49, 50 sind jeweils über eine Spannhülse 52 in sich geschlossen und verspannt. Je nachdem ob ein offener Rundring 49, 50 eingesetzt wird oder gegebenenfalls zwei halbe Rundringe 49, 50 sind entweder pro Rundring eine Spannhülse 52 oder gegebenenfalls zwei Spannhülsen 52 einzusetzen. Die Spannhülsen 52 besitzen ein Rechts-/Linksgewinde 53, 54, sodass durch Drehen der Spannhülse eine Lockerung der Rundringe 49, 50 erfolgen kann oder ein Verspannen.

Durch den Einsatz von geteilten Rundringen 49, 50 besteht hierbei die Möglichkeit, diese nachträglich um den Flanschhals 47 zu legen.

Zum Anbinden des Fittings 41 an den Schlauchabschnitt 40 wird hierbei der Fitting 41 mit seinem Flanschhals 47 zunächst auf die erste Kunststoffschicht aufgeschoben gegebenenfalls kaltverklebt und im Anschluss die Verstärkungslage 44 aufgewickelt, wobei diese über den ersten festliegenden Rundring 48 in Richtung auf die Flanschscheibe 46 geführt wird. Im Anschluss kann der dritte Rundring 50 aufgelegt werden und nach Zurückführung der Verstärkungslage 44 der zweite Rundring 49, sodass abschließend die Verstärkungslage 43 wieder über den feststehenden Rundring 48 in die Ebene des Schlauchabschnittes 40 zurückgeführt wird. Die Verspannung der Rundringe 50 erfolgt hierbei bevor die Verstärkungslage 44 zurückgeführt wird, während die Verspannung des zweiten Rundringes 49 nach erfolgter Zurückführung erfolgt, wobei aufgrund der offenen Rundringe beziehungsweise Halbringe eine nachträgliche Montage keine Probleme bereitet.

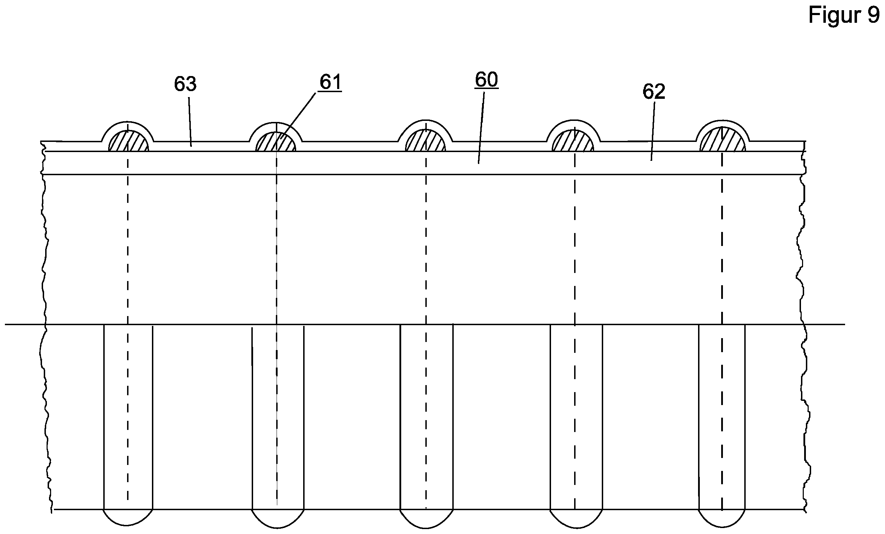

Figur 9 zeigt in einer teilweise geschnittenen Teilansicht einen Druckschlauch 60. Der Druckschlauch 60 entspricht in seinem Aufbau den zuvor beschriebenen Schlauchabschnitten, wobei dieser zusätzlich mit ringförmigen Versteifungselementen 61 auf dem äußeren Umfang ummantelt ist. Die Versteifungselemente 61 bestehen beispielsweise aus Hart-PU oder einem Verbundmaterial und werden entweder mit einer Verschleißschicht bzw. Deckschicht 62 ummantelt. Hierbei besteht die Möglichkeit, dass die Versteifungselemente 61 in einem Rotationsgussverfahren auf die Deckschicht 62 aufgetragen werden oder, sofern die Versteifungselemente 61 beispielsweise aus einem Faserverbund oder einer Drahtlage bestehen, auf die Deckschicht 62 aufge-wickelt werden. Über die Versteifungselemente 61 wird eine Verstärkungsschicht bzw. Deckschicht 63 aufgetragen, sodass der Druckschlauch 60 durch eine Deckschicht 63 vollständig umhüllt ist. Der Abstand der einzelnen Versteifungselemente 61, welche vorzugsweise in äquidistanten Abständen angeordnet werden, kann hierbei entsprechend den Anforderungen des Druckschlauches 60 festgelegt werden. Ebenso kann die Dicke der Versteifungselemente 61 festgelegt werden.

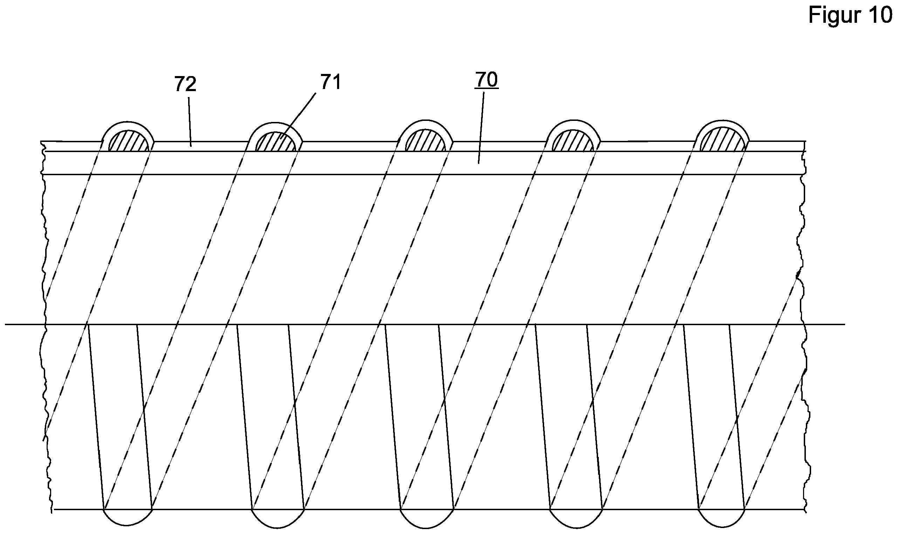

Figur 10 zeigt in einer teilweise geschnittenen Teilansicht einen Druckschlauch 70, der mit spiralförmigen Versteifungselementen 71 ummantelt ist. Die Versteifungselemente 71 können ebenso aus einem Hart-PU oder Verbundmaterial bestehen und werden in einem Rotationsgussverfahren aufgetragen bzw. aufgewickelt. Auf die Versteifungselemente 71 ist wiederum eine Schutzschicht 72 aufgetragen, die den gesamten Druckschlauch 70 umhüllt. Der Abstand der spiralförmigen Versteifungselemente 71 und deren Dicke kann an die Anforderungen der Druckfestigkeit angepasst werden.

### Bezugszeichenliste

- 1: Schlauchabschnitt
- 2: Fitting
- 3: Fitting
- 4: Körper
- 5: Kunststoffschicht
- 6: Kunststoffschicht
- 7: Verstärkungslage
- 8: Befestigungsbohrungen
- 9: Schlauchabschnitt
- 10: Körper
- 11: Fitting
- 12: Fitting
- 13: Stahlring
- 20: Fitting
- 21: Flanschscheibe
- 22: Flanschhals
- 23: Rundring
- 24: Rundring
- 25: Schlauchabschnitt
- 26: Kunststoffschicht
- 27: Kunststoffschicht
- 28: Verstärkungslage
- 29: Profilring
- 30: Vertiefung
- 31: Stahlband
- 40: Schlauchabschnitt
- 41: Fitting
- 42: Kunststoffschicht
- 43: Kunststoffschicht
- 44: Verstärkungslage
- 46: Flanschscheibe
- 47: Flanschhals
- 48: Rundring
- 49: Rundring
- 50: Rundring
- 51: Bohrungen
- 52: Spannhülse
- 53: Rechtsgewinde
- 54: Linksgewinde
- 60: Druckschlauch
- 61: ringförmiges Versteifungselement
- 62: Deckschicht
- 63: Deckschicht
- 63: Verstärkungsschicht
- 70: Druckschlauch
- 71: spiralförmiges Versteifungselement
- 72: Schutzschicht

## Patentansprüche

1. Verfahren zur Herstellung eines schlauchförmigen Körpers (4), insbesondere einen Schlauch zum Transport von abrasiven Materialien, bestehend zumindest aus einer Körperwandung, umfassend folgende Verfahrensschritte:
- Druckloses Auftragen zumindest einer ersten aushärtbaren Kunststoffschicht (5, 26, 42) aus reaktiven Polyurethan-Materialien auf einen Kern durch ein Rotationsgussverfahren,
- Aushärten der wenigstens einen Kunststoffschicht (5, 26, 42) zumindest zu 90%, bevor die Verstärkungslage (7, 28,44) aufgewickelt wird,
- Druckloses Auftragen zumindest einer zweiten aushärtbaren Kunststoffschicht (6, 27, 43), wobei die Verstärkungslage lunkerfrei zwischen beiden Kunststoffschichten (6, 27, 43) eingebettet wird, und
- Entnehmen des Kerns nach Fertigstellung des Körpers (4, 40),
- wobei der schlauchförmige Körper (4) zumindest einenends mit einem Fitting (2, 3, 11,12, 20, 41) versehen ist und die Fittinge (2, 3, 11,12, 20, 41) unmittelbar mit der Verstärkungsfaserlage verbunden sind, wobei die Fittinge aus einer Flanschscheibe (21, 46) mit Befestigungsbohrungen (8, 51) und einem Flanschhals (22, 47) oder aus einer Flanschscheibe (21, 46) mit Befestigungsbohrungen (8, 51) und einem Klemmring bestehen, wobei für die Fittinge Stahl oder ein Kunststoff, vorzugsweise Polyurethan-Material verwendet wird.

2. Verfahren nach Anspruch 1,
**dadurch gekennzeichnet,**
**dass** die wenigstens eine erste Kunststoffschicht (5, 26, 42) vor dem Aufwickeln der Verstärkungslage (7, 25, 44) zumindest zu 95 % ausgehärtet ist, oder dass die wenigstens eine erste Kunststoffschicht (5, 26, 42) vor dem Aufwickeln der Verstärkungslage (7, 25, 44) zu 98 % ausgehärtet ist.

3. Verfahren nach Anspruch 1 oder 2,
**dadurch gekennzeichnet,**
**dass** auf die erste (5, 26, 42) und/oder zweite Kunststoffschicht (6, 27, 43) zumindest eine weitere Kunststoffschicht aufgetragen wird.

4. Verfahren nach einem der Ansprüche 1, 2 oder 3,
**dadurch gekennzeichnet,**
**dass** die Verstärkungslage (7, 28, 44) zwischen der ersten (5, 26, 42) und zweiten Kunststoffschicht (6, 27, 43) eingebettet ist, oder dass die Verstärkungslage (7, 28, 44) zwischen der zweiten (6, 27, 43) und einer dritten Kunststoffschicht eingebettet ist.

5. Verfahren nach einem der Ansprüche 1 bis 4,
**dadurch gekennzeichnet,**
**dass** auf die Verstärkungslage (7, 28, 44) zumindest eine weitere Verstärkungslage (7, 28, 44) aufgewickelt wird oder dass auf die Verstärkungslage (7, 28, 44) zunächst eine weitere Kunststoffschicht und im Anschluss zumindest eine weitere Verstärkungslage (7, 28, 44) aufgewickelt wird.

6. Verfahren nach einem der Ansprüche 1 bis 5,
**dadurch gekennzeichnet,**
**dass** die wenigstens eine zweite Kunststoffschicht (6, 27, 43) zusätzlich mit einer Schutzschicht als Verschleißschicht überzogen wird.

7. Verfahren nach einem der Ansprüche 1 bis 6,
**dadurch gekennzeichnet,**
**dass** auf die letzte Kunststoffschicht (6, 27, 43), insbesondere Verschleißschicht, ein ringförmiges (61) oder spiralförmiges Versteifungselement (71) im Rotationsgussverfahren aufgetragen wird, welches zueinander beabstandet verläuft, oder dass auf die letzte Kunststoffschicht (6, 27, 43), insbesondere Verschleißschicht, ein ringförmiges (61) oder spiralförmiges Versteifungselement (71) aufgewickelt wird, welches zueinander beabstandet verläuft.

8. Verfahren nach einem der Ansprüche 1 bis 7,
**dadurch gekennzeichnet,**
**dass** die Versteifungselemente (61, 71) aus Hart-PU gegossen werden, oder dass die Versteifungselemente (61, 72) aus Faserverbundmaterialien, Glasfasern oder Metalldraht aufgewickelt werden.

9. Verfahren nach einem der Ansprüche 1 bis 8,
**dadurch gekennzeichnet,**
**dass** die Faserverbundmaterialien aus Faserbündeln, aus Endlosfasern oder aus Bändern in der Form eines Geleges bestehen, wobei die Matrix für die Faserverbundmaterialien aus schlagzähen aushärtbaren Kunststoffmischungen, wie PU oder Epoxidharzen besteht.

10. Verfahren nach einem der Ansprüche 1 bis 9,
**dadurch gekennzeichnet,**
**dass** die Faserverbundmaterialien mit der verwendeten Matrix vor dem Wickeln benetzt werden und auf der letzten Kunststoffschicht (6, 27, 43) aushärten.

11. Verfahren nach einem der Ansprüche 1 bis 10,
**dadurch gekennzeichnet,**
**dass** die erste (5,26, 42) und/oder zweite Kunststoffschicht (6, 26, 43) aus einem 2k-oder Mehrkomponenten-Polyurethansystem besteht.

12. Verfahren nach einem der Ansprüche 1 bis 11,
**dadurch gekennzeichnet,**
**dass** die Verstärkungslage (7, 28, 44) aus Einzelfasern, einem Cordgewebe oder aus einem Fasergelege besteht, welche(s) mit einem Winkel von 50° bis 60°, vorzugsweise 55° aufgewickelt wird, und/oder dass die Einzelfasern, das Cordgewebe oder das Fasergelege zumindest einmal über Kreuz aufgewickelt werden

13. Verfahren nach einem der Ansprüche 1 bis 12,
**dadurch gekennzeichnet,**
**dass** die Topfzeit der Kunststoffschichten (5, 6, 26, 27, 42, 43) bei ca. 45 Sekunden oder 5 bis 15 Sekunden oder bei 7 bis 8 Sekunden liegt.

14. Verfahren nach einem oder mehreren der Ansprüche 1 bis 13,
**dadurch gekennzeichnet,**
**dass** der Flanschhals (22, 47) mit zumindest einer Rippe oder einem Rundring (23, 48) versehen ist, welcher mit dem Flanschhals (22, 47) fest verbunden ist, beispielsweise verschweißt ist und auf dem Flanschhals (22, 47) zumindest ein axial verschiebbarer Rundring (24, 49, 50) gelagert ist.

15. Verfahren nach einem oder mehreren der Ansprüche 1 bis 14,
**dadurch gekennzeichnet,**
**dass** die Verstärkungslage (7, 28, 44) über die Rippen oder einem ersten festliegenden Rundring (23, 48) geführt wird und um einen zweiten verschieblich gelagerten Rundring (24, 49) auf dem Flanschhals (22, 47) gelegt wird, wobei die beiden Rundringe (23, 24, 48, 49) nebeneinander zu liegen kommen, oder dass die Verstärkungslage (7, 28, 44) über die Rippen oder einen ersten festliegenden Rundring (23, 48) geführt wird, im Anschluss um einen Profilring (29) gelegt wird und durch ein Stahlband (31) eine Verpressung von Verstärkungslage (7, 28, 44) und Profilring (29) auf dem Flanschhals (22, 47) erfolgt, wobei der Profilring (29) neben dem Rundring (23, 48) zu liegen kommt, und/oder dass die Verstärkungslage (7, 28, 44) über die Rippen oder einem ersten festliegenden Rundring (48) geführt wird und unterhalb eines zweiten verschieblich gelagerten Rundringes (49) zu liegen kommt, um einen dritten Rundring (50) herumgeführt und unter dem zweiten Rundring (49) sowie über den ersten Rundring (48) in die Ebene der Verstärkungslagen (44) zurückgeführt wird.

16. Verfahren nach einem oder mehreren der Ansprüche 1 bis 15,
**dadurch gekennzeichnet,**
**dass** bei mehreren Verstärkungslagen (7, 28, 44) jede einzelne Verstärkungslage (7, 28, 44) über jeweils eine Rippe oder einen Rundring (23, 48) geführt und befestigt wird, oder dass die ersten (5, 26, 42) und zweiten Kunststoffschichten (6, 27, 43) und die Verstärkungslage (7, 28, 44) zwischen Flanschscheibe (21) und Klemmring verspannt werden, oder dass die Fittinge (2, 3, 11, 12, 20, 41) mit ihrem Flanschhals (22, 47) auf die erste Kunststoffschicht (5, 26, 42) aufgeschoben und mit einer Kaltverklebung verbunden werden.

17. Schlauchförmiger Körper (4), insbesondere ein Schlauch zum Transport von abrasiven Materialien, bestehend aus zumindest einer Körperwandung nach einem oder mehreren der Verfahrensansprüche 1 bis 17, wobei eine Verstärkungslage (7, 28, 44) zwischen einer ersten (5, 26, 42) und einer zweiten zumindest zu 90% ausgehärteten Kunststoffschicht (6, 27, 43) aus Polyurethan-Materialien eingebettet ist, welche mit Hilfe eines Gießkopfes drucklos hergestellt ist, wobei die Verstärkungslage (7, 28, 44) aus Einzelfasern, einem Cordgewebe oder einem Fasergelege besteht, welches unter einem Winkel von 50° bis 60° über Kreuz aufgewickelt ist, wobei zumindest einenends ein Fitting (2, 3, 11,12, 20, 41) mit dem Körper (4) unmittelbar verbunden ist, wobei die Fittinge (2, 3, 11,12, 20, 41) aus einer Flanschscheibe (21, 46) mit Befestigungsbohrungen (8, 51) und einem Flanschhals (22, 47) oder aus einer Flanschscheibe (21, 46) mit Befestigungsbohrungen (8, 51) und einem Klemmring bestehen, wobei für die Fittinge Stahl oder ein Kunststoff, vorzugsweise Polyurethan-Material verwendet wird.

18. Schlauchförmiger Körper (4) nach Anspruch 17,
**dadurch gekennzeichnet,**
**dass** auf die erste (5, 26, 42) und/oder zweite Kunststoffschicht (6, 27, 43) zumindest eine weitere Kunststoffschicht aufgetragen ist.

19. Schlauchförmiger Körper (4) nach Anspruch 17 oder 18,
**dadurch gekennzeichnet,**
**dass** die Kunststoffschichten (5, 6, 26, 27, 42, 43) aus einem reaktiven Polyurethan-Material bestehen, welches als erste Schicht zur Stabilisierung auf einem entnehmbaren Kern beziehungsweise den darunter liegenden Schichten aus Verstärkungslagen (7, 28, 44) oder Kunststoffschichten zum Aushärten aufgetragen ist.

20. Schlauchförmiger Körper (4) nach einem oder mehreren der Ansprüche 17, 18 oder 19,
**dadurch gekennzeichnet,**
**dass** die Fittinge (2, 3, 11,12, 20, 41) mit ihrem Flanschhals (22, 47) auf die erste innere Kunststoffschicht (5, 26, 42) aufgeschoben und kalt verklebt sind, oder dass die ersten (5, 26, 42) und zweiten Kunststoffschichten (6, 27, 43) und die Verstärkungslage (7, 28, 44) zwischen einer Flanschscheibe (21) und einem Klemmring eingespannt sind.

21. Schlauchförmiger Körper (4, 40) nach einem oder mehreren der Ansprüche 17 bis 20,
**dadurch gekennzeichnet,**
**dass** die Fittinge (2, 3, 11,12, 20, 41) mit zumindest einer Rippe oder einem Rundring (23, 48) versehen sind und die wenigstens eine Verstärkungslage (7, 28, 44) über die Rippen oder einem ersten festliegenden Rundring (23, 48) geführt ist und um einen zweiten verschieblich gelagerten Rundring (24, 49) auf dem Flanschhals (22, 47) gelegt ist, wobei die beiden Rundringe (23, 24, 48, 49) nebeneinander zu liegen kommen, oder dass die Verstärkungslage (7, 28, 44) über die Rippen oder einen ersten festliegenden Rundring (23, 48) geführt ist, im Anschluss über einen Profilring (29) gelegt und durch ein Stahlband (31) eine Verpressung von Verstärkungslage (7, 28, 44) und Profilring (29) auf dem Flanschhals (22) erfolgt, wobei der Profilring (29) neben dem Rundring (23) liegt, oder dass die Verstärkungslage (7, 28, 44) über die Rippe oder einen ersten festliegenden Rundring (23, 48) geführt ist, unterhalb eines zweiten Rundrings (49) liegt und über einen dritten Rundring (50) geführt unterhalb des zweiten Rundringes (49) und über den ersten Rundring (48) in die Ebene der Verstärkungslage zurückgeführt ist.

22. Schlauchförmiger Körper (4, 40) nach einem oder mehreren der Ansprüche 17 bis 21,
**dadurch gekennzeichnet,**
**dass** die losen Rundringe (24, 49, 50) aus zwei Halbringen oder einem offenen Rundring bestehen, welche über Spannhülsen (52) mit endseitigen Rechts- / Linksgewinde (53, 54) verspannt sind.

23. Schlauchförmiger Körper (4,40) nach einem oder mehreren der Ansprüche 17 bis 22,
**dadurch gekennzeichnet,**
**dass** auf die letzte Kunststoffschicht (6, 27, 43), insbesondere Verschleißschicht, ein ringförmiges (61) oder spiralförmiges Versteifungselement (71) im Rotationsgussverfahren aufgetragen ist, welches zueinander beabstandet verläuft, oder dass auf die letzte Kunststoffschicht (6, 27, 43) ein ringförmiges (61) oder spiralförmiges Versteifungselement (71) aufgewickelt ist.

## Claims

1. Method of manufacturing a tubular body (4), in particular a tube for transporting abrasive materials, consisting at least of a body wall, comprising the following procedure steps:
- applying, without pressure, at least one first curable plastic layer (5, 26, 42) of reactive polyurethane materials onto a core by a rotational casting method,
- curing the at least one plastic layer (5, 26, 42) to at least 90 % before the reinforcement layer (7, 28, 44) is wound up,
- applying, without pressure, at least one second curable plastic layer (6, 27, 43), wherein the reinforcement layer is embedded between both plastic layers (6, 27, 43) free from shrink holes, and
- removing the core upon completion of the body (4, 40),
- wherein the tubular body (4) is provided, at least at one end, with a fitting (2, 3, 11, 12, 20, 41), and the fittings (2, 3, 11, 12, 20, 41) are directly connected with the reinforcement fibre layer, wherein the fittings consist of a flange disk (21, 46) with fastening bores (8, 51), and a flange neck (22, 47), or of a flange disk (21, 46) with fastening bores (8, 51) and a clamping ring, wherein steel or plastic, preferably a polyurethane material, is used for the fittings.

2. Method according to claim 1,
**characterized in**
**that** the at least one first plastic layer (5, 26, 42) is cured to at least 95 % before the reinforcement layer (7, 25, 44) is wound up, or that the at least one first plastic layer (5, 26, 42) is cured to 98 % before the reinforcement layer (7, 25, 44) is wound up.

3. Method according to claim 1 or 2,
**characterized in**
**that** at least one further plastic layer is applied onto the first (5, 26, 42) and/or second plastic layer (6, 27, 43).

4. Method according to one of claims 1, 2 or 3,
**characterized in**
**that** the reinforcement layer (7, 28, 44) is embedded between the first (5, 26, 42) and the second plastic layers (6, 27, 43), or that the reinforcement layer (7, 28, 44) is embedded between the second (6, 27, 43) and a third plastic layer.

5. Method according to one of claims 1 to 4,
**characterized in**
**that** at least one further reinforcement layer (7, 28, 44) is wound up onto the reinforcement layer (7, 28, 44), or that initially one further plastic layer and subsequently at least one further reinforcement layer (7, 28, 44) is wound up onto the reinforcement layer (7, 28, 44).

6. Method according to one of claims 1 to 5,
**characterized in**
**that** the at least one second plastic layer (6, 27, 43) is additionally coated with a protective layer as a wearing coat.

7. Method according to one of claims 1 to 6,
**characterized in**
**that** onto the last plastic layer (6, 27, 43), in particular wearing coat, an annular (61) or spiral stiffening element (71) is applied by rotational casting, which extends in parallel with respect to each other, or that onto the last plastic layer (6, 27, 43), in particular wearing coat, an annular (61) or spiral stiffening element (71) is wound up which extends in parallel with respect to each other.

8. Method according to one of claims 1 to 7,
**characterized in**
**that** the stiffening elements (61, 71) are cast of hard PU, or that the stiffening elements (61, 72) are wound up of composite fibre materials, glass fibres or metal wire.

9. Method according to one of claims 1 to 8,
**characterized in**
**that** the composite fibre materials consist of fibre bundles, continuous fibres, or of bands in the form of a fabric, wherein the matrix for the composite fibre materials consists of impact resistant, curable plastic mixtures, such as PU or epoxy resins.

10. Method according to one of claims 1 to 9,
**characterized in**
**that** the composite fibre materials with the employed matrix are wetted before they are wound and cure on the last plastic layer (6, 27, 43).

11. Method according to one of claims 1 to 10,
**characterized in**
**that** the first (5, 26, 42) and/or the second plastic layer (6, 26, 43) consists of a 2k or multiple-component polyurethane system.

12. Method according to one of claims 1 to 11,
**characterized in**
**that** the reinforcement layer (7, 28, 44) consists of individual fibres, corduroy, or a fibre fabric which is wound up at an angle of 50° to 60°, preferably 55°, and/or that the individual fibres, the corduroy or the fibre fabric are wound up at least once crosswise.

13. Method according to one of claims 1 to 12,
**characterized in**
**that** the pot life of the plastic layers (5, 6, 26, 27, 42, 43) is about 45 seconds or 5 to 15 seconds, or 7 to 8 seconds.

14. Method according to one or several ones of claims 1 to 13,
**characterized in**
**that** the flange neck (22, 47) is provided with at least one rib or a sealing ring (23, 48) firmly connected, for example welded, to the flange neck (22, 47), and at least one axially movable sealing ring (24, 49, 50) is mounted on the flange neck (22, 47).

15. Method according to one or several ones of claims 1 to 14,
**characterized in**
**that** the reinforcement layer (7, 28, 44) is guided over the ribs or a first, fixed sealing ring (23, 48) and placed around a second, movably held sealing ring on the flange neck (22, 47), wherein the two sealing rings (23, 24, 48, 49) come to lie one next to the other, or that the reinforcement layer (7, 28, 44) is guided over the ribs or a first, fixed sealing ring (23, 48), subsequently placed around a profile ring (29), and a pressing of the reinforcement layer (7, 28, 44) and the profile ring (29) on the flange neck (22, 47) is effected by a steel band (31), wherein the profile ring (29) comes to lie next to the sealing ring (23, 48), and/or that the reinforcement layer (7, 28, 44) is guided over the ribs or a first, fixed sealing ring (48) and comes to lie underneath a second, movably held sealing ring (49), is guided around a third sealing ring (50) and returned into the plane of the reinforcement layers (44) under the second sealing ring (49) and over the first sealing ring (48).

16. Method according to one or several ones of claims 1 to 15,
**characterized in**
**that** with several reinforcement layers (7, 28, 44), each individual reinforcement layer (7, 28, 44) is guided over one rib or one sealing ring (23, 48) each and fixed, or that the first (5, 26, 42) and second plastic layers (6, 27, 43) and the reinforcement layer (7, 28, 44) are braced between the flange disk (21) and the clamping ring, or that the fittings (2, 3, 11, 12, 20, 41) are pushed, with their flange necks (22, 47), onto the first plastic layer (5, 26, 42) and connected by cold bonding.

17. Tubular body (4), in particular a tube for transporting abrasive materials, consisting of at least one body wall according to one or several ones of method claims 1 to 17, wherein a reinforcement layer (7, 28, 44) is embedded between a first (5, 26, 42) and a second plastic layer (6, 27, 43) of polyurethane materials cured to at least 90 % which are manufactured without pressure by means of a shrink head, the reinforcement layer (7, 28, 44) consisting of individual fibres, corduroy or a fibre fabric wound up at an angle of 50° to 60° crosswise, wherein at least at one end, a fitting (2, 3, 11, 12, 20, 41) is directly connected with the body (4), wherein the fittings (2, 3, 11, 12, 20, 41) consist of a flange disk (21, 46) with fastening bores (8, 51) and a flange neck (22, 47), or of a flange disk (21, 46) with fastening bores (8, 51) and a clamping ring, wherein steel or plastic, preferably a polyurethane material, is used for the fittings.

18. Tubular body (4) according to claim 17,
**characterized in**
**that** at least one further plastic layer is applied onto the first (5, 26, 42) and/or second plastic layer (6, 27, 43).

19. Tubular body (4) according to claim 17 or 18,
**characterized in**
**that** the plastic layers (5, 6, 26, 27, 42, 43) consist of a reactive polyurethane material which is applied, as a first layer for stabilization, onto a removable core or the underlying layers of reinforcement layers (7, 28, 44) or plastic layers for curing.

20. Tubular body (4) according to one or several ones of claims 17, 18 or 19,
**characterized in**
**that** the fittings (2, 3, 11, 12, 20, 41) are shifted, with their flange neck (22, 47), onto the first inner plastic layer (5, 26, 42) and bonded by cold bonding, or that the first (5, 26, 42) and second plastic layers (6, 27, 43) and the reinforcement layer (7, 28, 44) are spanned between a flange disk (21) and a clamping ring.

21. Tubular body (4, 40) according to one or several ones of claims 17 to 20,
**characterized in**
**that** the fittings (2, 3, 11, 12, 20, 41) are provided with at least one rib or a sealing ring (23, 48), and the at least one reinforcement layer (7, 28, 44) is guided over the ribs or a first, fixed sealing ring (23, 48) and placed around a second, movably held sealing ring (24, 49) on the flange neck (22, 47), wherein the two sealing rings (23, 24, 48, 49) come to lie one next to the other, or that the reinforcement layer (7, 28, 44) is guided over the ribs or a first, fixed sealing ring (23, 48), subsequently placed over a profile ring (29), and a pressing of the reinforcement layer (7, 28, 44) and the profile ring (29) on the flange neck (22) is effected by a steel band (31), wherein the profile ring (29) lies next to the sealing ring (23), or that the reinforcement layer (7, 28, 44) is guided over the rib or a first, fixed sealing ring (23, 48), lies underneath a second sealing ring (49), and is guided over a third sealing ring (50) underneath the second sealing ring (49) and over the first sealing ring (48) back into the plane of the reinforcement layer.

22. Tubular body (4, 40) according to one or several ones of claims 17 to 21,
**characterized in**
**that** the loose sealing rings (24, 49, 50) consist of two half rings or one open sealing ring which are braced via clamping sleeves (52) with terminal righthand / left-hand threads (53, 54).

23. Tubular body (4, 40) according to one or several ones of claims 17 to 22,
**characterized in**
**that** onto the last plastic layer (6, 27, 43), in particular wearing coat, an annular (61) or spiral reinforcement element (71) is applied by rotational casting and extends in parallel with respect to each other, or that onto the last plastic layer (6, 27, 43), an annular (61) or spiral stiffening element (71) is wound up.

## Revendications

1. Procédé destiné à la fabrication d'un corps tubulaire (4), en particulier d'un tuyau destiné au transport de substances abrasives, consistant en tout au moins une paroi du corps, comprenant les phases de procédé suivantes :
- application sans pression sur un noyau de tout au moins une première couche de matière plastique (5, 26, 42) durcissable, composée de substances réactives en polyuréthane, selon un procédé par moulage de rotation ;
- durcissement à tout au moins 90 % de l'au moins une couche de matière plastique (5, 26, 42), avant que la couche de renfort (7, 28,44) ne soit enroulée ;
- application sans pression de tout au moins une deuxième couche de matière plastique (6, 27, 43) durcissable, la couche de renfort étant intégrée sans interstices entre les deux couches de matière plastique (6, 27, 43) ; et
- retrait du noyau après la finalisation du corps (4, 40) ;
- le corps tubulaire (4) étant pourvu d'un raccord (2, 3, 11, 12, 20, 41) tout au moins par une extrémité, et les raccords (2, 3, 11, 12, 20, 41) étant reliés directement à la couche de fibres de renforcement ;
- les raccords étant composés d'une flasque à bride (21, 46) avec des trous de fixation (8, 51) et d'une collerette à bride (22, 47), ou bien étant composés d'une flasque à bride (21, 46) avec des trous de fixation (8, 51) et d'une bague de serrage ;
de l'acier ou une matière plastique, de préférence un matériau en polyuréthane, étant utilisé(e) pour les raccords.

2. Procédé selon la revendication 1,
**caractérisé en ce que**
l'au moins une première couche de matière plastique (5, 26, 42) est durcie, tout au moins à 95 %, avant l'enveloppement de la couche de renfort (7, 25, 44) ; ou **caractérisé en ce que**
l'au moins une première couche de matière plastique (5, 26, 42) est durcie à 98 % avant l'enveloppement de la couche de renfort (7, 25, 44).

3. Procédé selon la revendication 1 ou 2,
**caractérisé en ce que**
tout au moins une autre couche de matière plastique est appliquée sur la première (5, 26, 42) et/ou sur la deuxième couche de matière plastique (6, 27, 43).

4. Procédé selon l'une des revendications 1, 2 ou 3,
**caractérisé en ce que**
la couche de renfort (7, 28, 44) est intégrée entre la première (5, 26, 42) et la deuxième couche de matière plastique (6, 27, 43) ; ou
**caractérisé en ce que**
la couche de renfort (7, 28, 44) est intégrée entre la deuxième couche de matière plastique (6, 27, 43) et une troisième couche de matière plastique.

5. Procédé selon l'une des revendications 1 à 4,
**caractérisé en ce que**
tout au moins une autre couche de renfort (7, 28, 44) est enroulée sur la couche de renfort (7, 28, 44) ; ou
**caractérisé en ce que**
une nouvelle couche de matière plastique est enveloppée dans un premier temps sur la couche de renfort (7, 28, 44), puis tout au moins une nouvelle couche de renfort (7, 28, 44) est enveloppée dans un second temps sur la couche de renfort (7, 28, 44).

6. Procédé selon l'une des revendications 1 à 5,
**caractérisé en ce que**
l'au moins une deuxième couche de matière plastique (6, 27, 43) est revêtue en outre d'une couche de protection faisant office de couche d'usure.

7. Procédé selon l'une des revendications 1 à 6,
**caractérisé en ce que**
un élément de renforcement annulaire (61) ou en spirale (71) est appliqué sur la dernière couche de matière plastique (6, 27, 43), en particulier sur la couche d'usure, selon un procédé par moulage de rotation, lequel élément de renforcement est disposé de manière espacée par rapport à la couche de matière plastique ; ou
**caractérisé en ce que**
un élément de renforcement annulaire (61) ou en spirale (71) est enroulé sur la dernière couche de matière plastique (6, 27, 43), en particulier sur la couche d'usure, lequel élément de renforcement est disposé de manière espacée par rapport à la couche de matière plastique.

8. Procédé selon l'une des revendications 1 à 7,
**caractérisé en ce que**
les éléments de renforcement (61, 71) sont coulés en polyuréthane rigide ; ou
**caractérisé en ce que**
les éléments de renforcement (61, 72) sont enroulés à partir de matériaux en fibres composites, de fibres de verre ou de fils métalliques.

9. Procédé selon l'une des revendications 1 à 8,
**caractérisé en ce que**
les matériaux en fibres composites sont composés de faisceaux de fibres, de fibres continues ou de bandes se présentant sous la forme d'un canevas, selon lequel la matrice pour les matériaux en fibres composites est composée de mélanges de matières plastiques durcissables et à haute résilience, telles que le PU ou les résines époxy.

10. Procédé selon l'une des revendications 1 à 9,
**caractérisé en ce que**
les matériaux en fibres composites sont imprégnés avec la matrice utilisé avant l'enveloppement et durcis sur la dernière couche de matière plastique (6, 27, 43).

11. Procédé selon l'une des revendications 1 à 10,
**caractérisé en ce que**
la première couche de matière plastique (5, 26, 42) et/ou la deuxième couche de matière plastique (6, 26, 43) sont constituées d'un système de polyuréthane à bicomposants ou à multi-composants.

12. Procédé selon l'une des revendications 1 à 11,
**caractérisé en ce que**
la couche de renfort (7, 28, 44) est constituée de fibres individuelles, d'un tissu de câbles ou d'un canevas de fibres, lequel ou lesquelles sont enroulés dans un angle compris entre 50° et 60°, de préférence 55°, et/ou
**caractérisé en ce que**
les fibres individuelles, le tissu de câbles ou le canevas de fibres sont enroulés en croix, tout au moins une fois.

13. Procédé selon l'une des revendications 1 à 12,
**caractérisé en ce que**
la durée d'utilisation des couches de matière plastique (5, 6, 26, 27, 42, 43) est d'environ 45 secondes ou de 5 à 15 secondes ou de 7 à 8 secondes.

14. Procédé selon l'une ou plusieurs des revendications 1 à 13,
**caractérisé en ce que**
la collerette à bride (22, 47) est pourvue de tout au moins une nervure ou d'un joint torique (23, 48), lequel est raccordé de manière fixe à la collerette à bride (22, 47), en étant par exemple soudé, et tout au moins un joint torique (24, 49, 50) coulissant de manière axiale est positionné sur la collerette à bride (22, 47).

15. Procédé selon l'une ou plusieurs des revendications 1 à 14,
**caractérisé en ce que**
la couche de renfort (7, 28, 44) est guidée à travers les nervures ou un premier joint torique (23, 48), lequel est positionné de manière fixe, et est posée sur la collerette à bride (22, 47), autour d'un deuxième joint torique (24, 49), lequel est positionné de manière coulissante, selon lequel les deux joints toriques (23, 24, 48, 49) viennent en position l'un à côté de l'autre ; ou
**caractérisé en ce que**
la couche de renfort (7, 28, 44) est guidée à travers les nervures ou un premier joint torique (23, 48), lequel est positionné de manière fixe, puis est positionnée autour d'une bague profilée (29) et une compression de la couche de renfort (7, 28, 44) et de la bague profilée (29) est réalisée sur la collerette à bride (22, 47), par l'intermédiaire d'une bande en acier (31), selon lequel la bague profilée (29) vient en position à côté du joint torique (23, 48) ; et/ou
**caractérisé en ce que**
la couche de renfort (7, 28, 44) est guidée à travers les nervures ou un premier joint torique (48), lequel est positionné de manière fixe, et vient en position au dessous d'un deuxième joint torique (49), lequel est positionné de manière coulissante, est enroulée autour d'un troisième joint torique (50) et est ramenée au niveau des couches de renfort (44) au dessous du deuxième joint torique (49), ainsi qu'à travers le premier joint torique (48).

16. Procédé selon l'une ou plusieurs des revendications 1 à 15,
**caractérisé en ce que**
dans le cas de plusieurs couches de renfort (7, 28, 44), chaque couche de renfort (7, 28, 44) individuelle est guidée respectivement à travers une nervure ou un joint torique (23, 48), puis fixée ; ou
**caractérisé en ce que**
les premières couches de matière plastique (5, 26, 42) et les deuxièmes couches de matière plastique (6, 27, 43), ainsi que la couche de renfort (7, 28, 44) sont tendues entre la flasque à bride (21) et la bague de serrage ; ou
**caractérisé en ce que**
les raccords (2, 3, 11, 12, 20, 41) sont glissés avec leur collerette à bride (22, 47) sur la première couche de matière plastique (5, 26, 42) et sont reliés au moyen d'un collage à froid.

17. Corps tubulaire (4), en particulier un tuyau destiné au transport de substances abrasives, consistant en tout au moins une paroi du corps selon l'une ou plusieurs des revendications de procédé 1 à 17 ;
selon lequel une couche de renfort (7, 28, 44) est intégrée entre une première couche de matière plastique (5, 26, 42) et une deuxième couche de matière plastique (6, 27, 43), laquelle est durcie tout au moins à 90 %, laquelle est composée de substances en polyuréthane et laquelle est fabriquée sans pression à l'aide d'une tête de coulée ;
selon lequel la couche de renfort (7, 28, 44) est constituée de fibres individuelles, d'un tissu de câbles ou d'un canevas de fibres, lequel est enroulé en croix dans un angle compris entre 50° et 60° ;
selon lequel un raccord (2, 3, 11, 12, 20, 41) est relié directement avec le corps (4), tout au moins par une extrémité ;
selon lequel les raccords (2, 3, 11,12, 20, 41) sont composés d'une flasque à bride (21, 46) avec des trous de fixation (8, 51) et d'une collerette à bride (22, 47), ou bien d'une flasque à bride (21, 46) avec des trous de fixation (8, 51) et d'une bague de serrage ;
selon lequel de l'acier ou une matière plastique, de préférence un matériau en polyuréthane, est utilisé(e) pour les raccords.

18. Corps tubulaire (4) selon la revendication 17,
**caractérisé en ce que**
tout au moins une autre couche de matière plastique est appliquée sur la première couche de matière plastique (5, 26, 42) et/ou sur la deuxième couche de matière plastique (6, 27, 43).

19. Corps tubulaire (4) selon la revendication 17 ou 18,
**caractérisé en ce que**
les couches de matière plastique (5, 6, 26, 27, 42, 43) sont composées d'un matériau en polyuréthane réactif, lequel est appliqué sur un noyau amovible comme première couche en vue de la stabilisation, respectivement est appliqué sur les couches sous-jacentes constituées des couches de renfort (7, 28, 44) ou des couches de matière plastique (5, 6, 26, 27, 42, 43) en vue du durcissement.

20. Corps tubulaire (4) selon l'une ou plusieurs des revendications 17, 18 ou 19,
**caractérisé en ce que**
les raccords (2, 3, 11, 12, 20, 41) sont glissés avec leur collerette à bride (22, 47) sur la première couche intérieure de matière plastique (5, 26, 42) et encollés à froid ; ou
**caractérisé en ce que**
les premières couches de matière plastique (5, 26, 42) et les deuxièmes couches de matière plastique (6, 27, 43), ainsi que la couche de renfort (7, 28, 44), sont tendues entre une flasque à bride (21) et une bague de serrage.

21. Corps tubulaire (4, 40) selon l'une ou plusieurs des revendications 17 à 20,
**caractérisé en ce que**
les raccords (2, 3,11,12, 20, 41) sont pourvus de tout au moins une nervure ou d'un joint torique (23, 48) et l'au moins une couche de renfort (7, 28, 44) est guidée à travers les nervures ou un premier joint torique (23, 48), lequel est positionné de manière fixe, et est posée sur la collerette à bride (22, 47), autour d'un deuxième joint torique (24, 49), lequel est positionné de manière coulissante ;
selon lequel les deux joints toriques (23, 24, 48, 49) viennent en position l'un à côté de l'autre ; ou
**caractérisé en ce que**
la couche de renfort (7, 28, 44) est guidée à travers les nervures ou un premier joint torique (23, 48), lequel est positionné de manière fixe, puis est positionnée à travers une bague profilée (29) et une compression de la couche de renfort (7, 28, 44) et de la bague profilée (29) est réalisée sur la collerette à bride (22, 47) par l'intermédiaire d'une bande en acier (31) ;
selon lequel la bague profilée (29) est positionnée à côté du joint torique (23) ; ou **caractérisé en ce que**
la couche de renfort (7, 28, 44) est guidée à travers la nervure ou un premier joint torique (23, 48), lequel est positionné de manière fixe, est positionnée au dessous d'un deuxième joint toriques (49) et est guidée à travers un troisième joint torique (50), et est ramenée au niveau de la couche de renfort au dessous du deuxième joint torique (49), à travers le premier joint torique (48).

22. Corps tubulaire (4, 40) selon l'une ou plusieurs des revendications 17 à 21,
**caractérisé en ce que**
les joints toriques (24, 49, 50) non fixés sont composés de deux demi-anneaux ou d'un joint torique ouvert, lesquels sont tendus par l'intermédiaire de douilles de serrage (52) avec un filetage d'extrémité à droite / à gauche (53, 54).

23. Corps tubulaire (4, 40) selon l'une ou plusieurs des revendications 17 à 22,
**caractérisé en ce que**
un élément de renforcement annulaire (61) ou en spirale (71) est appliqué sur la dernière couche de matière plastique (6, 27, 43), en particulier sur la couche d'usure, selon un procédé par moulage de rotation, lequel élément de renforcement est disposé de manière espacée par rapport à la couche de matière plastique ; ou
**caractérisé en ce que**
un élément de renforcement annulaire (61) ou en spirale (71) est enroulé sur la dernière couche de matière plastique (6, 27, 43).
